# EUROPÄISCHE PATENTSCHRIFT

(11) **EP 1 510 382 B1**
(45) Veröffentlichungstag und Bekanntmachung des Hinweises auf die Patenterteilung: **22.12.2010**
(21) Anmeldenummer: 04017810.5
(22) Anmeldetag: 28.07.2004
(51) Int. Cl.: B60J 1/20

(54) **Gekrümmtes Fensterrollo für Kraftfahrzeuge**
Curved roller blind for vehicles
Store à enroleur courbé pour véhicules

(30) Priorität: 23.08.2003 DE 10338900
(43) Veröffentlichungstag der Anmeldung: 02.03.2005
(73) Patentinhaber: BOS GmbH & Co. KG, 73760 Ostfildern (DE)
(72) Erfinder: Hansen, Melf, 75053 Gondelsheim (DE); Walter, Herbert, 73061 Ebersbach (DE); Maier, Matthias, 73733 Esslingen (DE)
(74) Vertreter: Rüger, Barthelt & Abel Patentanwälte

(56) Entgegenhaltungen:
- WO-A-03/024729
- DE-A- 1 654 037
- DE-U- 20 119 558
- FR-A- 2 779 474
- GB-A- 923 205
- GB-A- 191 319 261
- US-A1- 2002 033 244

## Beschreibung

Je nach Karosserieform eines Kraftfahrzeuges ist die Heckscheibe mehr oder weniger bombiert. Je stärker die Bombierung der Heckscheibe ausfällt, umso größer ist im Mittenbereich der Abstand zwischen der Innenseite der Heckscheibe und einen Fensterrollo, das längs einer Ebene ausgefahren wird.

Dies ist nicht nur aus ästhetischen Gründen zu beanstanden. Es sind vor allen Dingen die Platzverhältnisse im Formbereich des Fahrzeuges, die unter diesen Umständen Probleme bereiten. Das Fensterrollo muss mit einem deutlichen Abstand gegenüber der Heckscheibe angeordnet sein, womit sich für die Fondpassagiere die Kopffreiheit deutlich verringert. Insbesondere bei kleineren Fahrzeugen, in denen ohnehin notorischer Platzmangel herrscht, ist dies von erheblichem Nachteil.

Dabei würde es zur Verbesserung der Kopffreiheit nicht ausreichen, wenn lediglich das Auszugsprofil, an dem die Rollobahn befestigt ist, im oberen Bereich gekrümmt ist. Außerdem würden erhebliche Maßnahmen erforderlich sein, um die Stange im oberen Bereich auch zu krümmen. Günstiger sind die Verhältnisse, wenn das Auszugsprofil von vornherein eine entsprechende an die Scheibe angepasste Krümmung aufweist.

Ein gekrümmtes Auszugsprofil setzt aber wiederum einen gekrümmten Auszugsschlitz voraus, damit das Auszugsprofil bündig mit der Hutablage eingezogen werden kann. Würde in diesem Falle eine gerade Wickelwelle verwendet werden, würde die Rollobahn ständig an dem Schlitzrand streifen, was als unzweckmäßig angesehen wird.

Es ist deswegen auch bekannt, gekrümmte Wickelwellen zu verwenden. Eine Lösung für eine solche gekrümmte Wickelwelle ist beispielsweise in der DE 199 00 506 beschrieben. Die Wickelwellenanordnung für dieses Rollo weist eine starre Tragachse auf, die entsprechend dem gekrümmten Verlauf der ausgefahrenen Rollobahn gebogen ist. Die eigentliche Wickelwelle, mit der die Kante der Rollobahn verbunden ist, besteht aus einem Wellrohr, dass drehbar auf der Tragachse sitzt. Neben einem Ende der Tragachse befindet sich eine Schraubenfeder, die als Federmotor verwendet wird, um die rohrförmige Rollowelle im Sinne des Aufwickelns der Rollobahn in Umdrehungen zu versetzen.

Das Wellrohr besteht bei der bekannten Anordnung aus Kunststoff, so dass zu befürchten ist, dass das Wellrohr auf die Länge, beispielsweise eines Heckscheibenrollos, nicht unerheblich tordiert. Die Kraft, die der Federmotor bei voll ausgezogenem Rollo entwickeln muss, ist nicht unerheblich, denn anders kann nicht sichergestellt werden, dass die Rollobahn durch die Fahrzeugerschütterungen nicht zu sehr ins Schwingen gerät.

Aus der WO 03/024729 A1 ist eine weitere Konstruktion einer gekrümmten Wickelwelle für Rolloanordnungen bei Kraftfahrzeugen bekannt. Die gekrümmte Wickelwelle setzt sich aus einzelnen Segmenten zusammen, wobei jeweils benachbarte Segmente durch eine Zapfen-Bohrung-Kkupplung miteinander drehfest verbunden sind. Die einzelnen Segmente sind der Reihe nach auf einer Tragachse aufgefädelt, die durch eine zentrale Bohrung des jeweiligen Segmentes hindurch führt. Da die Tragachse gekrümmt ist, müssen die Bohrungen in den einzelnen Segmenten entsprechend weit im Durchmesser ausgeführt sein. Es sind keine Maßnahmen angegeben, wie dennoch unabhängig vom Krümmungsradius eine einigermaßen spielfreie bzw. kippfreie Lagerung bewerkstelligt wird.

Ausgehend hiervon ist es Aufgabe der Erfindung ein Heckfensterrollo für Kraftfahrzeuge mit gekrümmter Wickelwelle zu schaffen.

Diese Aufgabe wird erfindungsgemäß mit dem Rollo mit dem Merkmal des Anspruches 1 gelöst.

Bei dem neuen Fensterrollo ist eine starre Achse vorgesehen, die bogenförmig gekrümmt ist. Der Verlauf der Achse gibt den Verlauf der Krümmung wieder, unter der die Rollobahn ausgezogen wird.

Auf diese starren Achse sitzt die eigentliche Rollowelle, die sich aus mehreren rohrförmigen Wellenabschnitten zusammensetzt, deren Innendurchmesser deutlich größer ist als der Außendurchmesser der starren Achse. Zwischen der Achse und der Rollowelle sind Lagermittel angeordnet, die die Lagerung der Wellenabschnitte auf der Achse bewerkstelligen. Auch bei starker Krümmung können sich die einzelnen Wellenabschnitte klemmfrei drehen. Andererseits zeigen sie kein übermäßiges Spiel, was einerseits die Präzision der Lagerung verbessert und andererseits Klappergeräusche verhindert. Aufgrund der Lagermittel kann auch exakt vorgegeben werden, an welcher Stelle die Lagerung, bezogen auf den jeweiligen Wellenabschnitt, erfolgt. Dabei ist es von Vorteil, wenn die Lagermittel soweit wie möglich neben den Stirnenden der Wellenabschnitte liegen, dadurch kann ein geringer Überstand vermieden werden.

Die Kupplungsmittel kuppeln die einzelnen Wellenabschnitte drehfest miteinander. Mit Hilfe einer Antriebseinrichtung wird die Wickelwelle, die sich aus den einzelnen Wellenabschnitten zusammensetzt, zumindest im Sinne des Aufwickelns der Rollobahn in Umdrehung versetzt.

Vorteilhafterweise besteht die starre, als Trageinrichtung dienende Achse aus einem Rohr. Das Rohr hat den Vorteil bei geringem Gewicht sehr biegesteif zu sein. Außerdem können in dem Rohr weitere Teile des Fensterrollos untergebracht werden, soweit dies erforderlich ist.

Zur Aufhängung der Achse genügt es, wenn sie lediglich an einem Ende unmittelbar gehaltert ist.

Auf der anderen Seite der Achse kann ein Zwischenlager in Gestalt einer drehbaren Buchse vorgesehen sein, um die im Inneren der Achse untergebrachten Teile drehbar mit dem Außenbereich zu verbinden.

Die Wellenabschnitte können jeweils von einem Abschnitt eines Metallrohrs gebildet sein. Die Wandstärke dieses Metallrohres ist zweckmäßigerweise klein gegenüber dem Durchmesser. Es hat sich herausgestellt, dass eine Wandstärke zwischen 0,8 mm und 1,2 mm ausreichend ist.

Die Lagermittel zur spielarmen Lagerung der Wellenabschnitte können von Fortsätzen gebildet sein, die ein Stück weit radial nach Innen vorstehen und mit denen die Wellenabschnitte auf der Achse gelagert sind.

Diese Fortsätze sind vorteilhafterweise längs dem Umfang zweier Kreise verteilt angeordnet, wobei der eine Kreis in der Nähe eines Stirnendes und der andere Kreis in der Nähe des anderen Stirnendes des jeweiligen Wellenabschnitts angeordnet ist.

Die Fortsätze können einstückig angeformt sein, beispielsweise indem im Falle der Verwendung von Metallrohren entsprechende Sicken eingeprägt sind. Sie können aber auch, wenn die Wellenabschnitte von Kunststoffrohrabschnitten gebildet sind, einstückig angeformt sein. In jedem Falle ist der Höhe der Fortsätze so bemessen, dass der betreffende Wellenabschnitt klemmfrei auf der Achse drehen kann.

Alternativ zu den Fortsätzen können die Lagermittel auch von Buchsen gebildet sein, die endseitig in die Wellenabschnitte eingesteckt sind. Die Buchsen enthalten Bohrungen, die in der Mitte der Buchse, bezogen auf deren Länge, einen kleineren Durchmesser aufweisen als an den Enden. Eine besonders günstige Gestalt der Bohrung wird erreicht, wenn ihr Längsschnitt bikonkav ist.

Die Kupplungsmittel bestehen im einfachsten Falle in wenigstens einem, in axialer Richtung sich erstreckenden Fortsatz und einer dazu komplementären Ausnehmung, in die der Fortsatz eingreift. An jedem Stirnende eines Wellenabschnitts können mehrere solcher Zapfen vorgesehen sein, die in Umfangsrichtung äquidistant verteilt sind. Dazwischen entstehen Lücken, in die die Zapfen des benachbarten Wellenabschnittes weitgehend spielfrei eingreifen.

Eine andere Möglichkeit besteht darin, die Fortsätze auf einem Stirnende der Buchse auszubilden und auch dort entsprechende Ausnehmungen vorzusehen. In diesem Falle sitzen die Buchsen drehfest in dem jeweiligen Wellenabschnitt.

Damit die Rollobahn keine Falten wirft, ist sie zweckmäßigerweise in Querrichtung elastisch dehnbar.

Die Antriebseinrichtung für die Rollowelle kann von einem Federmotor gebildet sein. Der Federmotor kann die Gestalt einer Schraubenfeder oder einer Spiralfeder haben. In dem Falle der Schraubenfeder ist es von Vorteil, wenn sie in der als Rohr ausgebildeten, gekrümmten Achse untergebracht ist.

Um den in der Wickelwelle untergebrachten Federmotor mit der Wickelwelle zu kuppeln, ist an einem Ende der Achse ein ringförmiger Deckel vorgesehen, der mit einem Kragen in das als Achse dienende Tragrohr hineinragt und dessen radial außen liegender Kragen drehfest mit einem der Wellenabschnitte gekuppelt ist.

Dieser Kupplungsdeckel kann damit gleichzeitig als Radiallager für die Rollowelle dienen.

Im Übrigen sind Weiterbildungen der Erfindung Gegenstand von Unteransprüchen.

Beim Studium der Ausführungsbeispiele wird dem Fachmann klar, dass eine Reihe von Abwandlungen möglich sind, deren Darstellung den Umfang der Unterlagen unnötig vergrößern würde.

In der Zeichnung sind Ausführungsbeispiele des Gegenstandes der Erfindung dargestellt, es zeigen:
- Fig. 1: eine teilweise aufgebrochene Heckpartie eines Kraftfahrzeuges, in einer perspektivischen Dar- stellung mit Blick gegen die Innenseite der Heck- scheibe,
- Fig. 2: den prinzipiellen Aufbau des Heckscheibenrollos nach Fig. 1,
- Fig. 3: einen Längsschnitt durch ein Ende der Wickelwelle und der Tragachse des Heckscheibenrollos nach Fig. 2,
- Fig. 4: einen Schnitt ähnlich dem nach Fig. 3 durch das andere Ende der Wickelwelle,
- Fig. 5: eines der Wickelwellenstücke in einer Seitenan- sicht,
- Fig. 6: das Wickelwellenstück nach Fig. 5, in einer Stirnansicht,

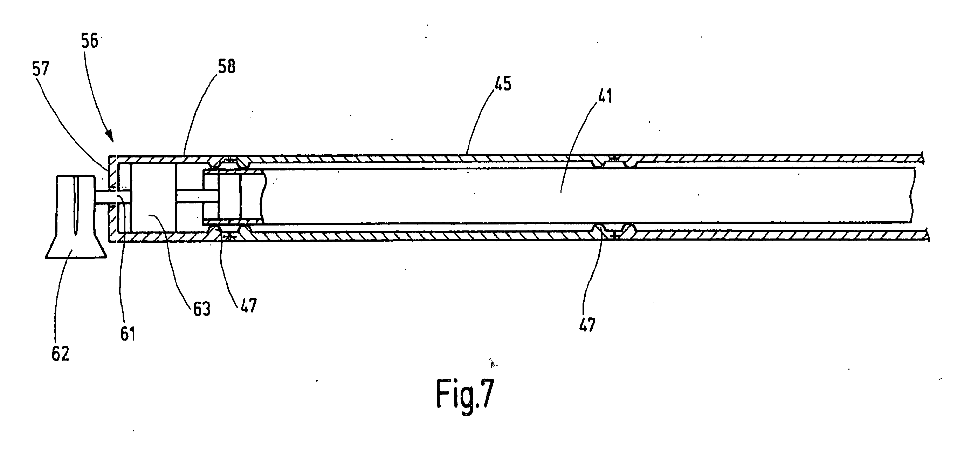

- Fig. 7: eine andere Art des Federmotors und

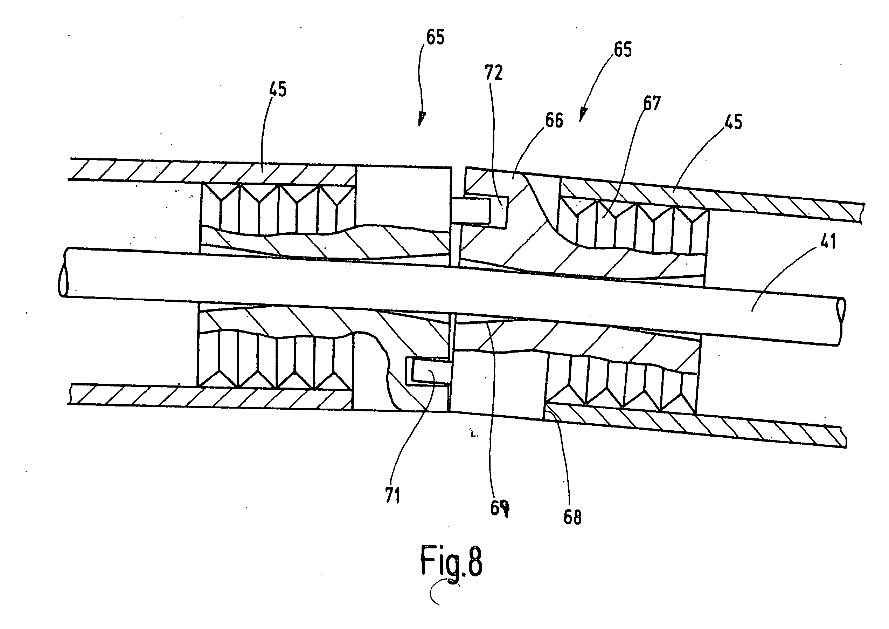

- Fig. 8: eine weitere Auführungsform zur Lagerung der Wel- lenabschnitte auf der Achse.

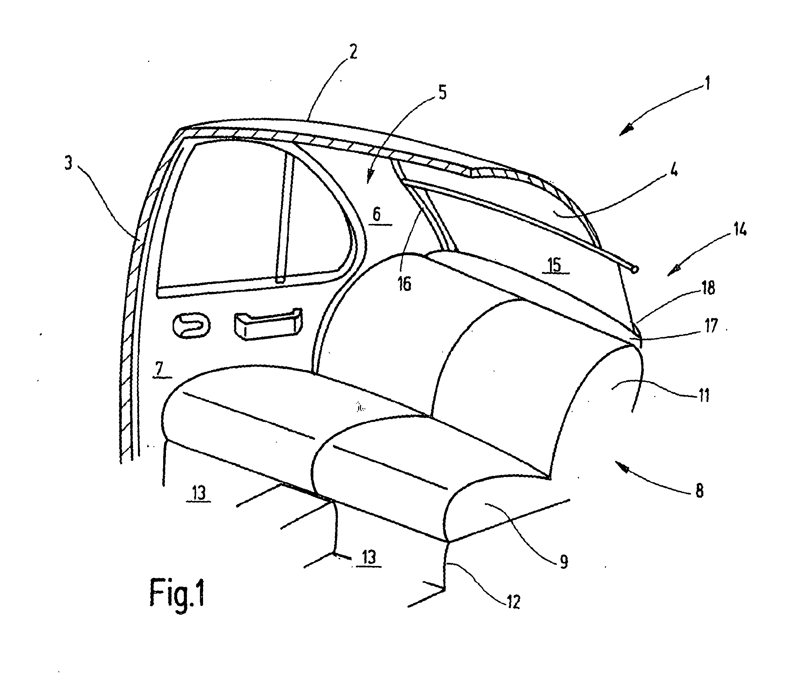

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine Innenverkleidung 6.

Zwischen der B-Säule 3 und der C-Säule 5 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogene Rollobahn sowie eine der seitlichen Führungsschienen 16 zu erkennen. Die Führungsschiene 16 beginnt an einer hinter der Rücksitzlehne 11 vorhandenen Hutablage 17 und verläuft neben der seitlichen Fensterkante. Außerdem enthält die Hutablage 17 einen durchgehendenden Auszugsschlitz 18, aus dem die Rollobahn 15 herausläuft. Der Auszugsschlitz 18 ist gekrümmt, um sich der Krümmung des Heckfensters 4 anzunähern.

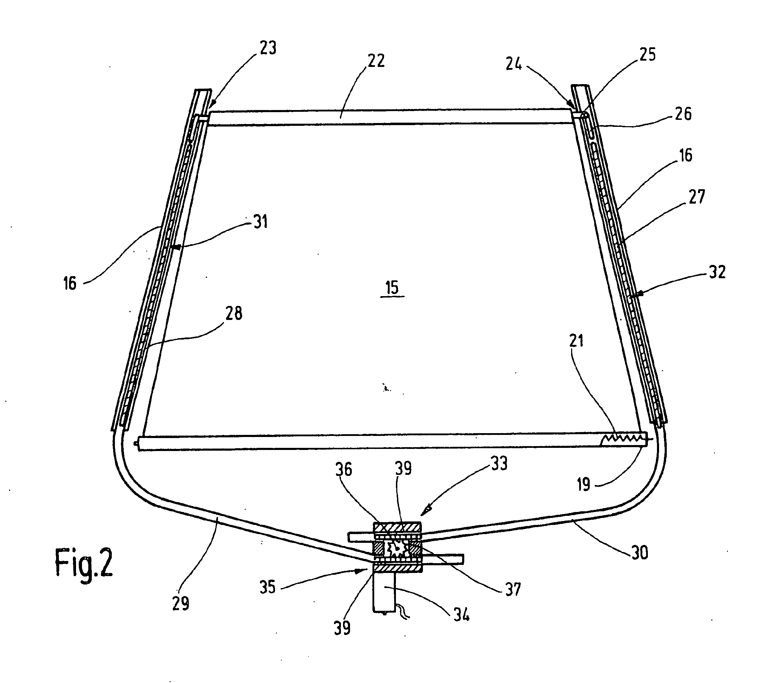

Der prinzipelle Aufbau des Heckscheibenrollos 14 ergibt sich aus Fig. 2.

Unterhalb der Hutablage 17 ist, wie sich aus Fig. 2 ergibt, eine gekrümmmte Wickelwelle 19 drehbar gelagert, an der mit einer Kante die Rollobahn 15 befestigt ist. Die Wickelwelle 19 ist mit Hilfe eines schematisch angedeuteten Federmotors 21 im Sinne des Aufwickelns der Rollobahn 15 auf die Wickelwelle 19 vorgespannt. Hierzu ist eine Schraubenfeder vorgesehen, die einends karosseriefest verankert und andernends in der Wickelwelle 19 festgelegt ist.

Die Krümmung der Wickelwelle 19 entspricht der Krümmung des Auszugschlitzes 18.

Die Rollobahn 15 weist einen etwa trapezförmigen Zuschnitt auf und ist an ihrer von der Wickelwelle 19 abliegenden Kante mit einer schlauchförmigen Schlaufe 22 versehen. Durch die schlauchförmige Schlaufe 22 führt ein Auszugsprofil oder Spriegel, in dem Führungsstücke 23 und 24 teleskopartig gelagert sind. Die Führungsstücke 23 und 24 weisen einen Halsteil 25 auf, der einen kleineren Durchmesser aufweist als ein sich daran anschließendes Führungsglied 26, das die Gestalt eines kurzen zylinderförmigen Abschnitts aufweist. Die Führungsstücke 26 laufen in den Führungsschienen 16, die neben den beiden Seitenkanten des Heckfensters 4 angeordnet sind.

Der Spriegel bzw. das Auszugsprofil ist entsprechend dem Verlauf des Auszugsschlitzes 18 gekrümmt.

Da sowohl die Wickelwelle 19 als auch das Auszugsprofil in gleicher Weise gekrümmt sind, beschreibt die ausgezogene Rollobahn 15 eine gekrümmte Fläche, deren Erzeugende eine Gerade ist. Die Rollobahn 15 streift nich an den Rändern des Auszugschlitzes 18.

Jede der Führungsschienen 16 enthält eine Führungsnut 27, die sich in Richtung auf die Rollobahn 15 in einem Führungsschlitz 28 öffnet.

Das untere Ende jeder Führungsschiene 16 ist mit einem Führungsrohr 29, 30 verbunden, in denen knicksteif zwei biegsame Schubglieder 31 und 32 geführt sind. Die biegsamen Schubglieder 31 und 32 sind sogenannte Suflexwellen. Sie bestehen aus einem zylinderförmigen Kern, der von einer schraubenförmig verlaufenden Rippe umgeben ist. Auf diese Weise wird eine Art flexibler Zahnstangen mit Rundumverzahnung erhalten.

Die Führungsrohre 29 und 30 verbinden die Führungsschienen 16 mit einem Getriebemotor 33. Der Getriebemotor 33 setzt sich aus einem permanent erregten Gleichstrommotor 34 und einem Getriebe 35 zusammen auf dessen Ausgangswelle 36 ein Stirnzahnrad 37 drehfest sitzt. Das Zahnrad 37 kämmt mit den beiden Schubgliedern 31 und 32 formschlüssig. Diese Schubglieder 31 und 32 laufen tangential an die an diametral gegenüberliegenden Seiten an dem Stirnzahnrad 37 vorbei und sind hierzu in entsprechenden Bohrungen 38 und 39 geführt.

Durch Ingangsetzen des Getriebemotors 33 werden die Schubglieder 31, 32 wahlweise vorgeschoben oder zurückgezogen. Der Bewegung der Schubglieder 31, 32 folgen die Führungsstücke 23 und 24. Diese werden mit Hilfe des Federmotors 21 gegen die freien Enden der Schubglieder 31, 32 anliegend gehalten, die sich in den Führungsnuten 27 befinden.

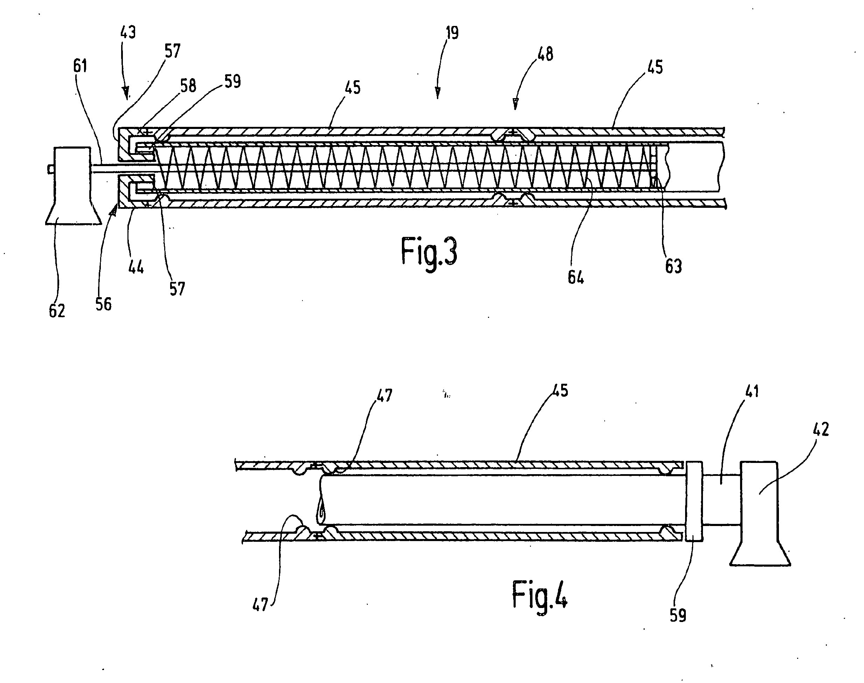

Der Aufbau der Wickelwelle wird nachstehend anhand der Figuren 3 bis 6 erläutert.

Gemäß den Figuren 3 und 4 gehören zu der Wickelwellenanordnung 19 eine gekrümmt verlaufende Achse 41, die in einem Lagerbock 42 fest verankert ist und deren andres Ende bei 43 lose gelagert ist. Ferner gehören zu der Wickelwellenanordnung 19 ein lose drehbarer Deckel 44 an dem Ende 43 sowie mehrere Wickelwellenstücke 45.

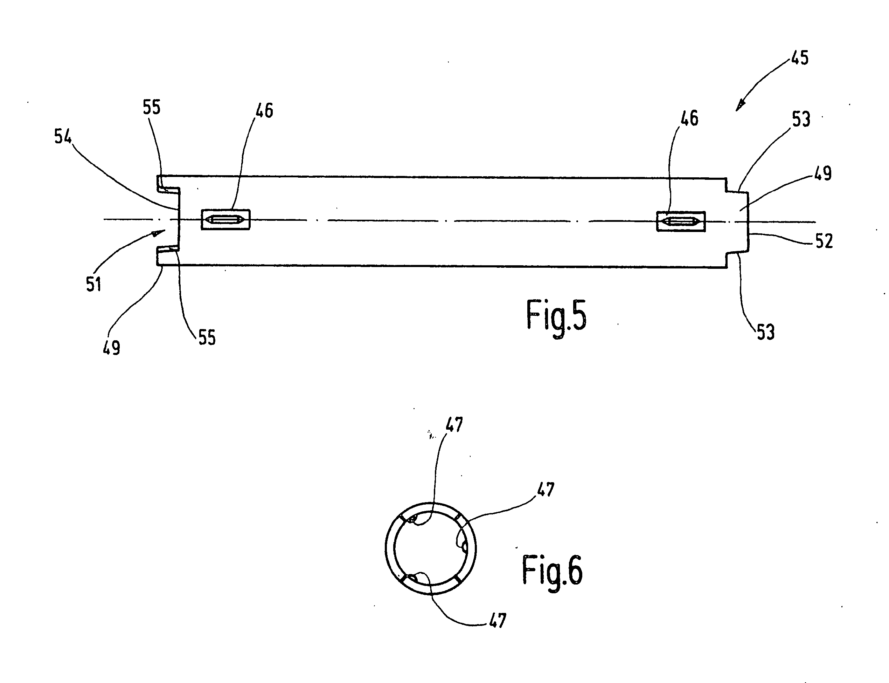

Wie die Zusammenschau, insbesondere der Figuren 3 und 4 erkennen lässt, setzt sich die Wickelwelle 19 aus mehreren, in axialer Richtung nebeneinander angeordneten Wickelwellenstücken 45 zusammen. Jedes Wickelwellenstück 45 besteht beispielsweise aus einem dünnwandigen Metallrohr. Der Aufbau des Metallrohres, das das Wickelwellenstück 45 darstellt, ist in den Figuren 5 und 6 im Einzelnen dargestellt.

In das Rohr sind zur Erzeugung des Wickelwellenstücks 45 insgesamt 6 Sicken 46 eingeprägt, die jeweils längs dem Umfang zweier Kreise angeordnet sind. Der eine Kreis befindet sich neben dem linken Ende des Wickelwellenstücks 45 und der andere neben dem rechten Ende. Aufgrund der Sicken 46 entstehen radial nach innen vorragende Noppen 47, wie sie Figur 6 erkennen lässt. Die Scheitel der Noppen 47 definieren einen Kreis, dessen Durchmesser kleiner ist als der Innendurchmesser des Metallrohres, aus dem das Wickelwellenstück 45 hergestellt ist.

Die Wickelwellenstücke 45 sind untereinander über Kupplungsmittel 48 gekuppelt. Die Kupplungsmittel 48 setzen sich aus Fortsätzen 49 und dazwischen liegenden Ausnehmungen 51 zusammen. Die Fortsätze 49 zeigen in axialer Richtung und entsprechend in ihren Abmessungen in Umfangsrichtung etwa den Abmessungen der Ausnehmungen 51, auch wiederum gesehen in Umfangsrichtung. Jeder Fortsatz 49 ist von einer ebenen Stirnfläche 52 sowie zwei Flankenflächen 53 begrenzt, die gegeneinander unter einem geringen Winkel verlaufen. Sie sind so orientiert, dass sich die Fortsätze 49 in Richtung auf ihr distales Ende verjüngen.

Die Ausnehmungen 51, die, wie erwähnt, etwa komplementär gestaltet sind, werden von einer Bodenfläche 54 sowie zwei in einem geringen Winkel zueinander verlaufenden Seitenflächen 55 begrenzt. Die Ausnehmungen 55 divergieren zu ihrem distalen Ende.

Aufgrund der speziellen Ausgestaltung wechseln sich an jedem Stirnende ein Fortsatz 49 und eine Ausnehmung 51 ab. Diese Gestaltung kann auch als Verzahnung am stirnseitigen Ende aufgefasst werden, bestehend aus Zahn und dazwischenliegender Zahnlücke.

Die genaue Dimensionierung der Fortsätze 49 und der Ausnehmungen 51 ergibt sich aus der weiter unten angegebenen Funktionsbeschreibung.

Die einzelnen Wickelwellenstücke 45 stecken, auf der starren Achse 41, die einen gebogenen Verlauf entsprechend dem gebogenen Verlauf des Auslaufschlitzes aufweist. Auf diese Weise wird eine gekrümmte Wickelwelle 19 erhalten, die ebenfalls dem Verlauf des Auslaufschlitzes 18 folgt. Die Achse 41 dient als Stütze oder Träger für die Wickelwellenstücke 45, die auf diese Weise in dem gewünschten Verlauf drehbar gelagert und gehalten sind. Die Wickelwellenstücke 45 bilden somit ein in sich gekuppeltes Rohr, mit dem polygonartig der Verlauf des Auslaufschlitzes 18 angenähert ist. Die Noppen 47 stellen dabei die Lagermittel dar, die als Gleitpunkt oder Gleitflächen mit der Außenoberfläche der Achse 41 zusammenwirken. Sie überbrücken den rohrförmigen Spalt zwischen der Innenseite der Wickelwellenstücke 45 und der Außenseite der Achse 41. Hierdurch wird außerdem wirksam verhindert, dass die geraden Wickelwellenstücke 45 auf der gebogenen Achse 41 in einem Mittenbereich klemmen könnten. Sie definieren, da sie im Bereich der Stirnenden der Wickelwellenstücke 45 angeordnet sind, auch gleichzeitig exakte Lagerpunkte, und kompensieren den Unterschied in dem polygonartigen Verlauf der Kette von Wickelwellenstücken 45 und dem kontinuierlich gekrümmten Verlauf der Achse 41.

Wie die Figur ferner erkennen lässt, greifen bei benachbarten Wickelwellenstücken 45 die Fortsätze 49 des einen Wickelwellenstücks 45 zwischen die Ausnehmungen oder Zwischenräume 51 des benachbarten Wickelwellenstücks 45 und umgekehrt.

Da die Verzahnungen gleichmäßig verteilt sind und die engste Nachbarschaft auf der Innenseite des bogenförmigen Verlaufes der Achse 41 liegt, wird sicher gestellt, dass beispielsweise bei der Verwendung von zwei Fortsätzen 49 spätestens nach einer Vierteldrehung wieder günstige spielarme oder spielfreie Verhältnisse hinsichtlich des Kupplungsspiels zwischen benachbarten Wickelwellenstücken 45 vorliegt. Die spielfreie Kupplung in Umfangsrichtung ergibt sich auch aus dem Umstand, dass auf der Innenseite der Krümmung der Achse 41 jeder Fortsatz oder Zahn 49 am tiefsten in die Ausnehmung 51 des benachbarten Wickelwellenstücks 45 eindringt. Aufgrund der äquidistanten Verteilung werden die gleichen Verhältnisse erzielt, wenn bei dem benachbarten Wickelwellenstück 45 dessen Fortsatz in die Ausnehmung des zuvor betrachteten Wickelwellenstücks 45 eindringt.

Die spezielle Art der Ausführung der Fortsätze 49 und der Ausnehmungen 51 führt zu einer besonders spielarmen Kupplung zwischen benachbarten Wickelwellenstücken 45, und damit zu einer besonders geringen Tordierung der Wickelwelle 19, wenn das eine ihrer Enden mit einem Drehmoment beaufschlagt wird und das andere Ende festgehalten ist.

Die Achse 41 ist als Rohr ausgeführt und an ihrem in Figur 4 erkennbaren rechten Ende starr in dem Lagerbock 58 aufgenommen. Unmittelbar neben dem Lagerbock 58 befindet sich ein Stellring 59, der das angrenzende Wickelwellenstück 45 in axialer Richtung führt. Das andere Ende der Achse 41 das in Figur 3 gezeigt ist und beispielsweise dem rechten Ende der Wickelwelle 19, bezogen auf die Orientierung im Fahrzeug entspricht, ist, wie gezeigt, lose gelagert.

Der Antrieb der Wickelwellenstücke 45 geschieht über den Deckel 44. Der Deckel 44 hat eine im Wesentlichen ringförmige Gestalt mit einem Boden 56 und zwei von dem Boden 56 aufragenden Krägen 57 und 58. Der Kragen 57 ragt in die rohrförmige Achse 41 hinein und ist dort beispielsweise unter Zwischenlager eines Kunststoffrings 59 weitgehend spielfrei drehbar gelagert. Der radial äußere Kragen 58 weist einen Durchmesser auf, wie die Wickelwellenstücke 45 und ist mit einer komplementären Verzahnung versehen, ähnlich der Verzahnung, wie sie an einem Ende jedes Wickelwellenstücks 45 vorgesehen ist. Auf diese Weise ist der Deckel 56 drehfest mit dem in Figur 3 links dargestellen Wickelwellenstück 45 gekuppelt.

Durch die Bohrung des ringförmigen Deckels 56 führt eine weitere Achse 61 mit einem kleineren Durchmesser, die in einem Lagerbock 62 starr gelagert ist. Die Achse 61 weist einen Durchmesser auf, so dass der Deckel 56 darauf mit lediglich geringem Radialspiel drehbar gelagert ist. Die Achse 61 ragt im Übrigen über den Deckel 56 hinaus in das Innere der rohrförmigen Achse 41 hinein. An dem freien Ende der Achse 61 ist eine Scheibe 63 vorgesehen, mit der sich die Achse 61 in der Achse 41 abstützt. Die Scheibe 63 dient gleichzeitig als Widerlager für eine Schraubenfeder 64, die den bereits erwähnten Federmotor 22 darstellt. Das andere Ende der Schraubenfeder 64 ist an dem inneren Kragen 57 des Deckels 56 befestigt.

Durch nicht weiter gezeigte Maßnahmen wird dafür gesorgt, dass der Deckel 56 in axialer Richtung gegenüber der Achse 41 festgelegt ist, so dass er nicht von den Wickelwellenstücken 45 entkuppeln kann.

An diesen Wickelwellenstücken 45 ist die Rollobahn 15 befestigt, die in Richtung parallel zur Längserstreckung der Wickelwellenanordnung 19 dehnbar ist. Auf diese Weise kann der auf den Wickelwellenstücken 45 gebildete Tuchballen aus Rollobahn 15 auf der Außenseite der Krümmung gedehnt werden.

Die beschriebene "Verzahnung", die als Kupplungseinrichtung zwischen benachbarten Wickelwellenstücken 45 vorgesehen ist, weist außerdem den Vorteil auf, dass es keinen durchgehenden, in Umfangsrichtung verlaufenden Spalt zwischen benachbarten Wickelwellenstücken 45 gibt. Ein solcher Spalt würde die Gefahr bedingen, dass bei der Rotation der Wickelwellenstücke 45 Rollobahnmaterial in diesen Spalt eindringt und bei der weiteren Rotation eingeklemmt wird.

Eine andere Ausführungsform des Federmotors 23 ist in Figur 5 gezeigt. Der ringförmige Deckel 56 ist hierbei ohne den inneren Kragen 57 ausgebildet und statt dessen ist der äußere Kragen 58 deutlich vertieft. Außerdem ist er im Bereich seinen freien Endes neben der Stirnverzahnung mit Noppen 47 versehen, mit denen er auf dem axialen Ende der Achse 41 radial geführt ist. Der Deckel 56 dient bei dem Ausführungsbeispiel nach Figur 5 als Federgehäuse, in dem eine Spiralfeder 63 angeordnet ist, deren äußeres Federende mit dem Deckel 56, und deren inneres Ende mit der Achse 61 verbunden ist. Die Achse 61 braucht deswegen nicht dieselbe Länge aufzuweisen, wie bei dem Ausführungsbeispiel nach Figur 3, sondern die Achse 61 ragt nur ein Stück weit in die rohrförmige Achse 41 hinein.

Im Übrigen ist auch die Funktion wie zuvor erläutert.

Figur 6 zeigt eine alternative Ausführungsform der Wickelwellenstücke 45. Sie sind hierbei als glatte, zylindrische Rohre mit glatten Enden ausgeführt. In jedem Wickelwellenstück 45 steckt auf beiden Seiten jeweils eine aus Kunststoff gespritzte Buchse 65, die sich aus einem Bund 66 und einem Schaft 67 zusammensetzt. Der Bund 66 weist dieselben Außendurchmesser auf, wie der Außendurchmesser des Rohres, dass das Wickelwellenstück 45 darstellt. Der Schaft oder Zapfen 67 steckt reibschlüssig und unverdrehbar in diesem Rohr soweit, bis der Bund 66 mit seiner Rückseite 68 stumpf anliegt. Durch die Buchse 65 führt eine Bohrung 69 hindurch, deren Längsschnitt, wie Figur 6 erkennen lässt, bikonkav ist. Das heißt, der Durchmesser der Bohrung 69 ist in der Mitte, bezogen auf die Länge, am kleinsten, und vergrößert sich in Richtung auf jedes axiale Ende der Bohrung 69. Dabei weist der Querschnitt an seinen Seitenflanken, wie gezeigt, eine etwa kreisförmig gekrümmte Begrenzungslinie auf. Der Durchmesser an der geringsten Stelle ist derart gewählt, dass ein Klemmen der Buchse 65 auf der Achse 41 vermieden ist.

Die Stirnseite des Bundes 66, die von dem Wickelwellenstück 45 weg weist, kann in der gleichen Weise ausgebildet sein, wie dies in Verbindung mit Figur 5 erläutert ist. Alternativ kann an der Stirnseite als Kupplungseinrichtung auch eine Gruppe von Zapfen 71 vorhanden sein, die eine zylindrische Gestalt aufweisen und die in axialer Richtung zeigen. Zwischen jeweils zwei benachbarten Zapfen befindet sich eine Bohrung 72 die einen Zapfen der gegenüberliegenden Buchse 65 aufnimmt.

Hinsichtlich des Spiels ergeben sich besonders günstige Verhältnisse, wenn die Zapfen 71 nicht exakt zylindrisch, sondern leicht kegelstumpfförmig sind, in der Weise, dass es sich von der Buchse 65 weg verjüngt. Hierdurch wird ein Klemmen vermieden, während andererseits ein geringes Spiel in Umfangsrichtung zwischen einem Zapfen 71 und einer Bohrung 72 sichergestellt ist, wenn dieser auf der Innenseite der Krümmung der Achse 41 maximal tief ineinander eintauchen.

Ein Heckscheibenrollo für Kraftfahrzeuge weist ein gekrümmtes Auszugsprofil und eine gekrümmte Wickelwelle auf, die in ihrem Verlauf der Krümmung des Auszugsprofils entspricht. Die Wickelwelle setzt sich aus mehreren Wickelwellensicken zusammen, die auf einer Achse drehbar gelagert ist. Der Verlauf der Achse gibt die Krümmung der segmentierten Wickelwelle wieder.

Ein Federmotor ist entweder innerhalb der Achse, oder seitlich neben der Achse angeordnet.

## Patentansprüche

1. Fensterrollo (14) für Kraftfahrzeuge,
mit einer starren Achse (41), die bogenförmig gekrümmt und undrehbar gelagert ist,
mit einer auf der Achse (41) drehbar gelagerten Rollowelle (19), die aus wenigstens zwei rohrförmigen Wellenabschnitten (45) zusammengesetzt ist, deren Innendurchmesser größer als der Außendurchmesser der Achse (41) ist, mit Kupplungsmitteln (49,51,71,72), die dazu eingerichtet sind benachbarte Wellenabschnitte (45) drehfest miteinander zu kuppeln,
mit einer Rollobahn (15), die mit einer Kante an der Rollowelle (19) befestigt ist und die eine von der Rollowelle (19) abliegende Kante (22) aufweist, und
mit einer Antriebseinrichtung (21), die mit der Wickelwelle (19) gekuppelt ist um die Wickewelle (19) wenigstens im Sinne eines Aufwickelns der Rollobahn (15) auf die Wickelwelle (19) in Umdrehungen zu versetzen
**dadurch gekennzeichnet, dass** das Fensterrollo lagermitteln (47, 65) aufweist zur spielarmen Lagerung der Wellenabschnitte (45) auf der Achse (41), wobei die Lagermittel (46,47) von Fortsätzen, die ein Stück weit radial nach innen vorstehen und mit denen die Wellenabschnitte (45) auf der Achse (41) gelagert sind, oder alternativ von Buchsen gebildet sind, die endseitig in die Wellenabschnitte (45) eingesteckt sind, wobei die Buchsen (65) Bohrungen (69) aufweisen, die in der Mitte der Buchse (65), bezogen auf deren Länge, einen kleineren Durchmesser aufweisen als an den Enden.

2. Fensterrollo nach Anspruch 1, **dadurch gekennzeichnet, dass** die starre Achse (41) von einem Rohr gebildet ist.

3. Fensterrollo nach Anspruch 1, **dadurch gekennzeichnet, dass** die starre Achse (41) lediglich an einem Ende unmittelbar gehaltert ist.

4. Fensterrollo nach Anspruch 1, **dadurch gekennzeichnet, dass** die starre Achse (41) unter Zwischenlage (56) einer drehbaren Buchse auf einer Lagerachse (61) abgestützt ist.

5. Fensterrollo nach Anspruch 4, **dadurch gekennzeichnet, dass** die Lagerachse (61) lediglich ein Stück weit in die rohrförmige starre Achse (41) hineinragt.

6. Fensterrollo nach Anspruch 1, **dadurch gekennzeichnet, dass** jeder Wellenabschnitt (45) von einem Abschnitt eines Metallrohrs gebildet ist.

7. Fensterrollo nach Anspruch 6, **dadurch gekennzeichnet, dass** die Wandstärke des Metallrohres klein gegenüber dem Durchmesser ist.

8. Fensterrollo nach Anspruch 1, **dadurch gekennzeichnet, dass** die Fortsätze (46,47) längs dem Umfang zweier Kreise verteilt sind, wobei der eine Kreis in der Nähe eines Stirnendes und der andere Kreis in der Nähe des anderen Stirnendes des jeweiligen Wellenabschnittes (45) angeordnet ist.

9. Fensterrollo nach Anspruch 8, **dadurch gekennzeichnet, dass** je Kreis wenigstens drei Fortsätze (46,47) vorgesehen sind.

10. Fensterrollo nach Anspruch 1, **dadurch gekennzeichnet, dass** die Fortsätze (46,47) einstückig angeformt sind.

11. Fensterrollo nach Anspruch 1, **dadurch gekennzeichnet, dass** die Fortsätze (46,47) von eingeprägten Sicken gebildet sind.

12. Fensterrollo nach Anspruch 1, **dadurch gekennzeichnet, dass** die Fortsätze (46,47) eine Höhe aufweisen derart, dass ein Streifen des Wellenabschnittes (45) auf der Achse (41) verhindert ist.

13. Fensterrollo nach Anspruch 12, **dadurch gekennzeichnet, dass** der Längsschnitt der Bohrung (69) eine bikonkave Gestalt aufweist.

14. Fensterrollo nach Anspruch 1, **dadurch gekennzeichnet, dass** die Kupplungsmittel (49,51,71,72) von wenigsten einem in axialer Richtung sich erstreckenden Fortsatz (49,71) und einer dazu komplementären Ausnehmung (51,72) gebildet sind, in die der Fortsatz (49,71) eingreift.

15. Fensterrollo nach Anspruch 14, **dadurch gekennzeichnet, dass** mehrere Fortsätze (49) an jedem Stirnende des Wellenabschnittes (45) vorgesehen sind, wobei der Abstand zwischen den Fortsätzen (49) der Breite der Fortsätze (49), gemessen in Umfangsrichtung, entspricht derart, dass die Konfiguration an jedem Stirnende eines Wellenabschnittes (45) gleich ist.

16. Fensterrollo nach Anspruch 14,_**dadurch gekennzeichnet, dass** die Fortsätze (49, 71) sich ausgehend von dem Wellenabschnitt (45) in Richtung auf das freie Ende verjüngen.

17. Fensterrollo nach Anspruch 14, **dadurch gekennzeichnet, dass** die Fortsätze (49, 71) auf einer Stirnseite der Buchse (65) ausgebildet sind.

18. Fensterrollo nach Anspruch 14, **dadurch gekennzeichnet, dass** die Fortsätze (71) runde Zapfen und die Ausnehmungen (72) zylindrische Bohrungen sind.

19. Fensterrollo nach Anspruch 1, **dadurch gekennzeichnet, dass** die Rollobahn (15) in Querrichtung elastisch dehnbar ist.

20. Fensterrollo nach Anspruch 1, **dadurch gekennzeichnet, dass** die Antriebseinrichtung (21) von einem Federmotor gebildet ist.

21. Fensterrollo nach Anspruch 1, **dadurch gekennzeichnet, dass** die Antriebseinrichtung (21) eine Schraubenfeder (64) aufweist, die in der als Rohr ausgebildeten Achse (41) angeordnet ist.

22. Fensterrollo nach Anspruch 1, **dadurch gekennzeichnet, dass** an einem Ende der Rollowelle (19) ein Kupplungsdeckel (56) vorgesehen ist, der zwei in axialer Richtung vorstehende Krägen (57,58) trägt, von denen der radial Innere in die Achse (41) ragt und mit der Feder (64) gekuppelt ist, während der radial äußere Kragen (58) mit Kupplungsmittel versehen ist, die zu den Kupplungsmitteln (49,51) des benachbarten Wellenabschnitts (45) komplementär sind.

23. Fensterrollo nach Anspruch 22, **dadurch gekennzeichnet, dass** der Kupplungsdeckel (56) als Radiallager für das betreffende Ende der Tragachse dient.

24. Fensterrollo nach Anspruch 1, **dadurch gekennzeichnet, dass** die Antriebseinrichtung (21) wenigstens eine Spiralfeder (63) umfasst.

## Claims

1. Window roller blind (14) for motor vehicles,
with a rigid axis means (41), which is curved in an arc shape and non-rotatably mounted,
with a roller blind shaft (19), which is rotatably mounted on the axis means (41) and is configured from at least two tubular shaft sections (45), the inside diameter of which is larger than the outside diameter of the axis means (41),
with coupling elements (49, 51, 71, 72), which are fitted to couple adjacent shaft sections (45) to one another to be fixed against rotation,
with a blind sheet (15), which is fastened to the roller blind shaft (19) at one edge and has an edge (22) remote from the roller blind shaft (19), and
with a drive means (21), which is coupled to the winding shaft (19) in order to set the winding shaft (19) in rotation at least in the sense of winding the blind sheet (15) up onto the winding shaft (19),
**characterised in that** the window roller blind has bearing elements (47, 65) for mounting the shaft sections (45) with low play on the axis means (41), wherein the bearing elements (46, 47) are formed by extensions, which project radially inwards for a short distance and at which the shaft sections (45) are mounted on the axis means (41), or alternatively by bushes, which are inserted into the shaft sections (45) at the ends, wherein the bushes (65) have holes (69), which in the centre of the bush (65) have a smaller diameter in relation to their length than at the ends.

2. Window roller blind according to claim 1, **characterised in that** the rigid axis means (41) is formed by a tube.

3. Window roller blind according to claim 1, **characterised in that** the rigid axis means (41) is held directly only at one end.

4. Window roller blind according to claim 1, **characterised in that** the rigid axis means (41) is supported on a bearing axis (61) with a rotatable bush interposed (56).

5. Window roller blind according to claim 4, **characterised in that** the bearing axis (61) projects only a short distance into the tubular rigid axis means (41).

6. Window roller blind according to claim 1, **characterised in that** each shaft section (45) is formed by a section of a metal tube.

7. Window roller blind according to claim 6, **characterised in that** the wall thickness of the metal tube is small in relation to the diameter.

8. Window roller blind according to claim 1, **characterised in that** the extensions (46, 47) are distributed along the circumference of two circles, wherein one circle is arranged in the vicinity of one face end and the other circle is arranged in the vicinity of the other face end of the respective shaft section (45).

9. Window roller blind according to claim 8, **characterised in that** at least three extensions (46, 47) are provided for each circle.

10. Window roller blind according to claim 1, **characterised in that** the extensions (46, 47) are moulded on in one piece.

11. Window roller blind according to claim 1, **characterised in that** the extensions (46, 47) are formed by impressed beads.

12. Window roller blind according to claim 1, **characterised in that** the height of the extensions (46, 47) is such that the shaft section (45) is prevented from touching the axis means (41).

13. Window roller blind according to claim 12, **characterised in that** the longitudinal section of the hole (69) has a concave structure.

14. Window roller blind according to claim 1, **characterised in that** the coupling elements (49, 51, 71, 72) are formed from at least one extension (49, 71) extending in axial direction and a recess (51, 72) complementary thereto, into which the extension (49, 71) engages.

15. Window roller blind according to claim 14, **characterised in that** multiple extensions (49) are provided on each face end of the shaft section (45), wherein the spacing between the extensions (49) corresponds to the width of the extensions (49), measured in circumferential direction, such that the configuration at each face end of a shaft section (45) is the same.

16. Window roller blind according to claim 14, **characterised in that** the extensions (49, 71) taper from the shaft section (45) towards the free end.

17. Window roller blind according to claim 14, **characterised in that** the extensions (49, 71) are configured on a face of the bush (65).

18. Window roller blind according to claim 14, **characterised in that** the extensions (71) are round pins and the recesses (72) are cylindrical holes.

19. Window roller blind according to claim 1, **characterised in that** the blind sheet (15) is elastically extensible in the transverse direction.

20. Window roller blind according to claim 1, **characterised in that** the drive means (21) is formed by a spring motor.

21. Window roller blind according to claim 1, **characterised in that** the drive means (21) has a coil spring (64), which is arranged in the axis means (41) configured as a tube.

22. Window roller blind according to claim 1, **characterised in that** arranged on one end of the roller blind shaft (19) is a coupling cover (56), which bears two collars (57, 58) provided in axial direction, the radially inner collar of which projects into the axis means (41) and is coupled to the spring (64), whereas the radially outer collar (58) is provided with coupling elements, which are complementary to the coupling elements (49, 51) of the adjacent shaft section (45).

23. Window roller blind according to claim 22, **characterised in that** the coupling cover (56) serves as a radial bearing for the respective end of the support axis.

24. Window roller blind according to claim 1, **characterised in that** the drive means (21) comprises at least one spiral spring (63).

## Revendications

1. Store de fenêtre à enrouleur (14) pour véhicules automobiles,
comprenant un axe (41) rigide qui est incurvé en forme d'arc et monté fixe en rotation,
comprenant un arbre de store (19) qui est monté tournant sur l'axe (41) et se compose d'au moins deux tronçons d'arbre (45) tubulaires dont le diamètre intérieur est supérieur au diamètre extérieur de l'axe (41),
comprenant des moyens d'accouplement (49, 51, 71, 72) qui sont agencés pour accoupler l'un à l'autre des tronçons d'arbre (45) contigus,
comprenant une bande de store (15) qui est fixée avec un bord à l'arbre de store (19) et qui présente un bord (22) éloigné de l'arbre de store (19), et
comprenant un dispositif d'entraînement (21) qui est accouplé à l'arbre d'enroulement (19), afin de mettre en rotation ledit arbre (19), au moins dans le sens de l'enroulement de la bande de store (15) sur l'arbre d'enroulement (19),
**caractérisé par le fait que** le store de fenêtre à enrouleur présente des moyens de support (47, 65) destinés au support avec faible jeu des tronçons d'arbre (45) sur l'axe (41), les moyens de support (46, 47) étant formés de saillies, qui s'élèvent d'une petite distance radialement vers l'intérieur et par lesquelles les tronçons d'arbre (45) sont supportés sur l'axe (41), ou bien de douilles qui sont insérées dans les extrémité des tronçons d'arbre (45), les douilles (65) présentant des trous (69) qui ont au milieu de la douille (65), rapporté à sa longueur, un diamètre plus faible qu'aux extrémités.

2. Store de fenêtre à enrouleur selon la revendication 1, **caractérisé par le fait que** l'axe (41) rigide est formé d'un tube.

3. Store de fenêtre à enrouleur selon la revendication 1, **caractérisé par le fait que** l'axe (41) rigide est fixé de façon directe seulement à une extrémité.

4. Store de fenêtre à enrouleur selon la revendication 1, **caractérisé par le fait que** l'axe (41) rigide est en appui sur un axe de support (61), avec interposition (56) d'une douille rotative.

5. Store de fenêtre à enrouleur selon la revendication 4, **caractérisé par le fait que** l'axe de support (61) avance seulement d'une petite distance dans l'axe (41) rigide en forme de tube.

6. Store de fenêtre à enrouleur selon la revendication 1, **caractérisé par le fait que** chaque tronçon d'arbre (45) est formé d'un tronçon d'un tube métallique.

7. Store de fenêtre à enrouleur selon la revendication 6, **caractérisé par le fait que** l'épaisseur de paroi du tube métallique est faible par rapport au diamètre.

8. Store de fenêtre à enrouleur selon la revendication 1, **caractérisé par le fait que** les saillies (46, 47) sont réparties sur la circonférence de deux cercles, l'un des cercles étant disposé à proximité de l'une des extrémités frontales, et l'autre cercle étant disposé à proximité de l'autre extrémité frontale du tronçon d'arbre (45) concerné.

9. Store de fenêtre à enrouleur selon la revendication 8, **caractérisé par le fait qu'**au moins trois saillies (46, 47) sont prévues par cercle.

10. Store de fenêtre à enrouleur selon la revendication 1, **caractérisé par le fait que** les saillies (46, 47) sont réalisées d'une seule pièce.

11. Store de fenêtre à enrouleur selon la revendication 1, **caractérisé par le fait que** les saillies (46, 47) sont formées de moulures réalisées par estampage.

12. Store de fenêtre à enrouleur selon la revendication 1, **caractérisé par le fait que** les saillies (46, 47) présentent une hauteur telle que le tronçon d'arbre (45) ne puisse pas frôler l'axe (41).

13. Store de fenêtre à enrouleur selon la revendication 12, **caractérisé par le fait que** la coupe longitudinale du trou (69) présente une forme biconcave.

14. Store de fenêtre à enrouleur selon la revendication 1, **caractérisé par le fait que** les moyens d'accouplement (49, 51, 71, 72) sont constitués d'au moins une saillie (49, 71), s'étendant dans le sens axial, et d'un évidement (51, 72) complémentaire dans lequel s'engage la saillie (49, 71).

15. Store de fenêtre à enrouleur selon la revendication 14, **caractérisé par le fait que** plusieurs saillies (49) sont prévues sur chaque extrémité frontale du tronçon d'arbre (45), la distance entre les saillies (49) correspondant à la largeur des saillies (49), mesurée dans le sens périphérique, de manière à ce que la configuration soit la même à chaque extrémité frontale d'un tronçon d'arbre (45).

16. Store de fenêtre à enrouleur selon la revendication 14, **caractérisé par le fait que** les saillies (49, 71) se rétrécissent à partir du tronçon d'arbre (45), en direction de l'extrémité libre.

17. Store de fenêtre à enrouleur selon la revendication 14, **caractérisé par le fait que** les saillies (49, 71) sont réalisées sur une face frontale de la douille (65).

18. Store de fenêtre à enrouleur selon la revendication 14, **caractérisé par le fait que** les saillies (71) sont des tenons ronds, et les évidements (72) sont des alésages cylindriques.

19. Store de fenêtre à enrouleur selon la revendication 1, **caractérisé par le fait que** la bande de store (15) peut s'étirer de façon élastique dans le sens transversal.

20. Store de fenêtre à enrouleur selon la revendication 1, **caractérisé par le fait que** le dispositif d'entraînement (21) est constitué d'un moteur à ressort.

21. Store de fenêtre à enrouleur selon la revendication 1, **caractérisé par le fait que** le dispositif d'entraînement (21) présente un ressort hélicoïdal (64) qui est disposé dans l'axe (41) réalisé sous forme de tube.

22. Store de fenêtre à enrouleur selon la revendication 1, **caractérisé par le fait qu'**il est prévu, à une extrémité de l'arbre de store (19), une plaque de fermeture d'accouplement (56) qui porte deux collets (57, 58) faisant saillie dans le sens axial et parmi lesquels le collet situé radialement à l'intérieur avance dans l'axe (41) et est accouplé au ressort (64), tandis que le collet (58), situé radialement à l'extérieur est pourvu de moyens d'accouplement qui sont complémentaires des moyens d'accouplement (49, 51) du tronçon d'arbre (45) voisin.

23. Store de fenêtre à enrouleur selon la revendication 22, **caractérisé par le fait que** le couvercle d'accouplement (56) sert de palier radial pour l'extrémité concernée de l'axe de support.

24. Store de fenêtre à enrouleur selon la revendication 1, **caractérisé par le fait que** le dispositif d'entraînement (21) comprend au moins un ressort en spirale (63).
